# EUROPÄISCHE PATENTSCHRIFT

(11) **EP 2 295 225 B1**
(45) Veröffentlichungstag und Bekanntmachung des Hinweises auf die Patenterteilung: **06.06.2012**
(21) Anmeldenummer: 10170878.2
(22) Anmeldetag: 27.07.2010
(51) Int. Cl.: B29C 49/58, F16K 15/06, B29C 49/42

(54) **Blasventil**
Blow valve
Soupape de soufflage

(30) Priorität: 11.09.2009 DE 102009041253
(43) Veröffentlichungstag der Anmeldung: 16.03.2011
(73) Patentinhaber: Krones AG, 93073 Neutraubling (DE)
(72) Erfinder: Blochmann, Erik, 93073 Neutraubling (DE)
(74) Vertreter: Grünecker, Kinkeldey, Stockmair & Schwanhäusser

(56) Entgegenhaltungen:
- EP-A1- 0 775 655
- WO-A1-2006/008380
- DE-A1- 19 509 776
- FR-A1- 2 878 308
- GB-A- 1 424 219
- US-A- 3 747 625
- US-A- 4 403 940
- US-A1- 2002 129 855

## Beschreibung

Die Erfindung betrifft ein Blasventil der im Oberbegriff des Patentanspruchs 1 angegebenen Art.

Bei einem solchen, aus der Praxis bekannten, Blasventil ist die den Mündungen mit einem Abstand gegenüberliegende Oberseite der Wand eben und senkrecht zur Verstellrichtung des Ventilkolbens. Der Kolbenfortsatz weist eine ebene, zur Verstellrichtung senkrechte Oberfläche auf, an der die Schließfläche geformt ist. Zum leichteren Bearbeiten der kreisringförmigen Schließfläche kann die Fläche am Ende des Kolbenfortsatzes eine zentrale, ebene und seichte Vertiefung aufweisen. Die sich in der Offenstellung des Ventilkolbens entwickelnde Strömung in der Ventilkammer muss zweifach umgelenkt werden. Beim Öffnen des Blasventils expandiert die Strömung in der großvolumigen, zylindrischen Ventilkammer, deren Tiefe etwa dem Öffnungshub und deren Durchmesser einem Mehrfachen jedes Mündungsdurchmessers entspricht. Aus der Ventilkammer muss sich das turbulente und verzögerte Medium in wenigstens eine Mündung des Abströmkanals zwängen und wieder beschleunigt werden. Aus dem geometrischen Konzept in der Ventilkammer, das heißt den senkrecht zur Verstellrichtung des Kolbens orientierten, ebenen Flächen resultieren Toträume und erhebliche Druckverluste durch Turbulenzen. Das Blasventil ist in den Toträumen schwierig zu reinigen. Die unvermeidbaren Druckverluste führen zu unerwünscht langen Schaltdifferenzen zwischen dem Öffnungsimpuls und der Druckbeaufschlagung des Vorformlings.

Bei dem aus EP 1 328 396 bekannten Blasventil wird die sich in der Offenstellung entwickelnde Strömung zumindest dreimal und jeweils über. 90° umgelenkt und in der großen Ventilkammer expandiert. In der Ventilkammer entstehen starke Turbulenzen, aus denen unzweckmäßige hohe Druckverluste und lange Schaltdifferenzen resultieren.

In einem aus WO 2006/008380 A bekannten Blasventil sind in einer Ausführungsform (Fig. 2A, B, C) die ringförmige Sitzfläche am Kolbenfortsatz wie auch der ringförmige Ventilsitz konisch ausgebildet, so dass diese konischen Flächen in der Offenstellung des Blasventils gegenüber der Verstellrichtung des Ventilkolbens allgemein schräge rotationssymmetrische Leitflächen mit geraden Erzeugenden bilden. Die Strömung aus den radial orientierten Zuström-Kanalmündungen in die axiale Abström-Kanalmündung wird trotz der Leitflächen mehrfach umgelenkt. Ferner liegen in der Offenstellung des Ventilkolbens Totzonen vor, in denen sich Ablagerungen festsetzen können, und die schwierig zu reinigen sind.

Bei aus US 3 747 625 A und US 4 403 940 A bekannten Blasventilen sind allgemein schräg zur Verstellrichtung des Ventilkolbens verlaufende, konische und rotationssymmetrische Leitflächen in nur einem kurzen Abschnitt des Strömungsweges vorgesehen.

Der Erfindung liegt die Aufgabe zugrunde, ein Blasventil der eingangs genannten Art anzugeben, das in der Offenstellung mit minimalem Druckverlust und dadurch mit optimal kurzer Schaltdifferenz arbeitet. Teil der Aufgabe ist es auch, unzweckmäßige Toträume zu vermeiden, die den Druckluftverbrauch erhöhen und die Reinigbarkeit, z.B. durch Spülen des Blasventils mit einem Reinigungmedium, verschlechtern.

Die gestellte Aufgabe wird mit den Merkmalen des Patentanspruchs 1 gelöst.

Die allgemein schrägen Leitflächen bewirken eine seitliche Zwangsumlenkung der Strömung in der Ventilkammer, wodurch starke und einen hohen Druckverlust bedingende Turbulenzen minimiert werden. Mit der Verringerung des Druckverlustes geht eine optimal kurze Schaltdifferenz einher. Sowohl in der Wand als auch am Kolbenfortsatz ist jeweils mindestens eine Leitfläche vorgesehen, um in der Offenstellung eine turbulenzarme zügige und vor allem geführte Strömung vom Zuströmkanal in den Abströmkanal zu erzeugen. Eine Verbesserung ergäbe sich jedoch schon mit wenigstens nur einer Leitfläche am Kolbenfortsatz oder in der Wand. Unharmonische oder scharfe und Turbulenzen fördernde Flächenübergänge sind minimiert. Wenn überhaupt, entstehen nur minimale Toträume. Somit ist die Wirbelbildung minimal und lässt sich das Blasventil leicht reinigen, z.B. in einem Spülprozess. Die jeweilige Leitfläche ist der Strömung zugewandt zumindest bereichsweise konkav gerundet, und zwar in und quer zur Strömungsrichtung. Eine solche konkave Rundung führt zu einem deutlich verbesserten Strömungsbild in der Strömung und damit zur Verringerung des bei der Umlenkung entstehenden Druckverlusts. Um die Toträume so klein wie möglich zu halten, und eine saubere Strömungsführung zu erzwingen, sind die Leitflächen in muldenartigen Vertiefungen im Kolbenfortsatz und in der Wand gebildet. Die Weite jeder Vertiefung kann dabei dem Durchmesser der außenliegenden Mündung oder der zentralen Mündung entsprechen.

Günstig ist es, wenn der im Wesentlichen senkrecht zur Verstellrichtung des Ventifkolbens orientierte Ventilsitz und/oder die Schließfläche am Ventilkolben eben, kugelig oder konisch ausgebildet ist bzw. sind. Speziell kugelige oder konische Ausbildungen, die gleichartig oder wechselseitig oder mit einer ebenen Ausbildung kombiniert sein können, resultieren in hoher Dichtigkeit in der Sperrstellung, und tragen auch zur Vergleichmäßigung der Strömung und damit zur weiteren Verringerung des Druckverlustes bei.

Bei einer zweckmäßigen Ausführungsform sind in der Offenstellung die Leitflächen an der Wand und am Kolbenfortsatz harmonisch ineinander übergeführt, um der außenliegenden schnelleren Grenzschicht der Strömung möglichst wenig Strömungswiderstand entgegenzusetzen.

Bei einer zweckmäßigen Ausführungsform erstreckt sich die Leitfläche an der Wand sogar direkt bis zur Mündung, so dass die Strömung ohne nennenswert abzureißen direkt bis in die Mündung geführt wird.

Bei einer baulich einfachen Ausführungsform wird die Wand von einem stationär in die Ventilkammer eingesetzten Ring gebildet. Aufgabe des Ringes kann es sein, mit der Unterseite eine Vorsteuerkammer zu begrenzen, in der der Ventilkolben auf einer gegenüber dem Kolbenfortsatz größeren Beaufschlagungsfläche durch einen die Schließkraft erzeugenden Vorsteuerdruck beaufschlagt wird, wobei, vorzugsweise, wegen der größeren Beaufschlagungsfläche ein relativ moderater Vorsteuerdruck zum Halten der Sperrstellung ausreicht, und nach Abbau des Vorsteuerdrucks der Ventilkolben durch den Zuströmdruck sehr schnell in die Offenstellung gebracht wird.

Bei einer besonders zweckmäßigen Ausführungsform sind neben einer zentralen Mündung zwei außenliegende, in Bezug auf die Achse der zentralen Mündung diametral angeordnete Mündungen vorgesehen, denen jeweils eine nach außen ansteigende Leitfläche an der Wand zugeordnet ist. Der zur zentralen Mündung ausgerichtete, zumindest in der Sperrstellung in die zentrale Mündung bereichsweise eintauchende Kolbenfortsatz weist hingegen zwei über eine erhabene Strömungsteilzone verbundene und zu den außenliegenden Mündungen orientierte, abfallende Leitflächen auf. Die Mündungen können kreisrund, oval, nierenförmig oder beliebig geformt sein. Es könnte auch nur eine außenliegende Mündung vorgesehen sein. In dieser Ausbildung wird eine besonders saubere und druckverlustarme Strömungsführung erzielt. Abhängig davon, welche Mündung zum Zuströmkanal bzw. zum Abströmkanal gehört, wird entweder die Strömung aus der Zuströmkanal-Mündung verlustarm in zwei im Wesentlichen gleiche Teilströmungen aufgezweigt, die zu den außenliegenden Mündungen geführt werden, oder werden zwei Teilströmungen aus den außenliegenden, zum Zuströmkanal gehörenden Mündungen harmonisch in eine in die Mündung zum Abströmkanal verlaufende Strömung zusammengeführt.

Bei einer zweckmäßigen Ausführungsform sind diese Vertiefungen in Verstellrichtung des Ventilkolbens zumindest in etwa gleich tief, so dass in der Offenstellung ein großquerschnittiger und harmonischer Strömungsweg entsteht.

Besonders zweckmäßig werden die Leitflächen von an der Wand und dem Ventilkolben vorgesehenen Verdrängungskörpern begrenzt. Die Verdrängungskörper minimieren das Totvolumen in der Ventilkammer, sodass in der geführten Strömung keine nennenswerten Druckverluste erzeugende Expansion und Verwirbelung auftritt.

Bei einer anderen, zweckmäßigen Ausführungsform können sich die Vertiefungen in Strömungsrichtung sogar allmählich verengen und, vorzugsweise einen Düsenquerschnitt ähnlich einer Venturidüse bilden, die sich in Richtung zum Abströmkanal verengt, so dass die Strömung vergleichmäßigt und beschleunigt wird, wodurch sich der Druckverlust noch weiter reduzieren lässt.

Die Durchströmrichtung im Blasventil kann nach Bedarf gewählt werden. Bevorzugt wird, die zentrale Mündung dem Zuströmkanal, und die außenliegende bzw. werden beide außenliegenden Mündungen dem Abströmkanal zugeordnet.

Der in der Ventilkammer angeordnete Ring kann zweigeteilt sein, in einen die erforderlichen Abdichtungen bewirkenden unteren Ring und einen oberen, der Strömungsführung dienenden Ring. Der der Strömungsführung dienende Ring könnte auch zum Nachrüsten von bereits benutzten Blasventilen verwendet werden, und könnte sogar aus Kunststoff bestehen.

Um die Strömungsverhältnisse auch oder aus der jeweiligen Mündung zu verbessern, kann zumindest eine der Mündungen eine Gegenleitfläche aufweisen.

Anhand der Zeichnung werden Ausführungsformen des Erfindungsgegenstandes erläutert. Es zeigen:
- Fig. 1: einen Achsschnitt eines Blasventils in Sperrstellung,
- Fig. 2: einen Achsschnitt des Blasventils in Offenstellung,
- Fig. 3: einen schematischen Achsschnitt einer anderen Ausführungsform des Blas- ventils,
- Fig. 4: einen schematischen Achsschnitt einer weiteren Ausführungsform des Blas- ventils,
- Fig. 5: einen schematischen Achsschnitt zweier Detailvariationen des Schaltventils,
- Fig. 6: einen Achsschnitt eines Teils eines Blasventils einer weiteren Ausführungs- form, und
- Fig. 7: eine Perspektivansicht eines Details einer weiteren Ausführungsform.

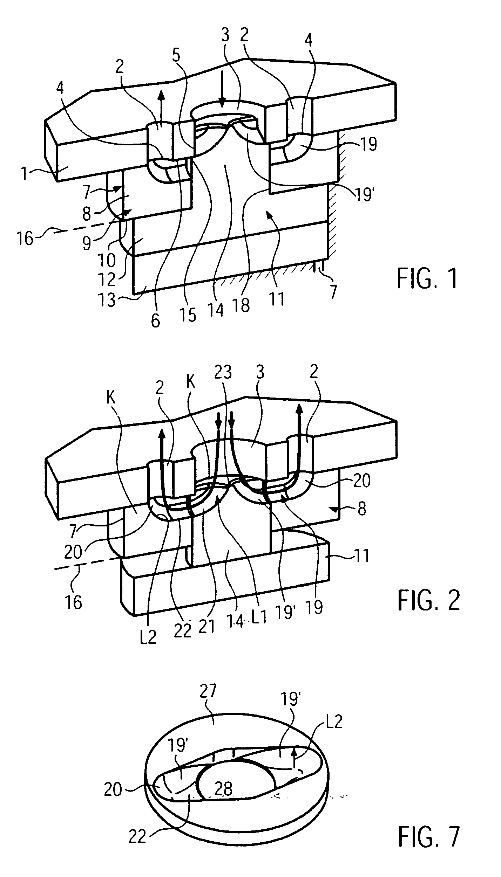

Die in Fig. 1 (Sperrstellung) und Fig. 2 (Offenstellung) gezeigte Ausführungsform eines Blasventils V wird beispielsweise durch einen Steuerdruck aus einem nicht gezeigten Pilotventil in die Sperrstellung geschaltet, und durch den anstehenden Zuströmdruck nach Abbau des Steuerdrucks in die Offenstellung gebracht. Alternativ könnte das Blasventil V mechanisch oder durch einen Magneten (nicht gezeigt) betätigt werden.

In einem nicht gezeigten Gehäuse des Blasventils V ist eine Platte 1 montiert, in der ein zentraler als axiale Bohrung ausgebildeter Zuströmkanal 3 und zwei außelegende, im Bezug auf den Zuströmkanal 3 diametral positionierte, jeweils als kreisförmige Bohrungen ausgebildete Abströmkanäle 2, angeordnet sind. An der Unterseite der Platte 1 bilden die Kanäle 2, 3 z.B. kreisrunde Mündungen 4, 5. Die jeweilige Mündung könnte auch oval, nierenförmig oder beliebig geformt sein. Unterhalb der Platte 1 befindet sich eine Ventilkammer 7, die durch eine Wand 8 beispielsweise in Form eines Ringes 9 begrenzt wird. In der Ventilkammer 7 ist ein Ventilkolben 11 (Differentialkolben) abgedichtet verschieblich geführt, der einen unteren großdurchmessrigen Kolbenteil 12 und einen zentralen Kolbenfortsatz 14 mit kleinerem Durchmesser aufweist. An der Unterseite des Ventilkolbens 11 ist eine Steuerkammer 13 vorgesehen, zu der ein Steuerdruckanschluss 17 führt. Am Kolbenfortsatz 14 ist am oberen Ende eine Schließfläche 15 (hier beispielsweise eine Kreisringfläche, die im Wesentlichen senkrecht zur Verstellrichtung des Ventilkolbens 11 angeordnet ist) vorgesehen. Der Kolbenfortsatz 14 wird durch zumindest eine Dichtung 18 in der Bohrung des Rings 9 abgedichtet. Eine Zwischenringkammer 10 zwischen dem großdurchmessrigen Kolbenteil 13 und dem Ring 9 ist beispielsweise über einen Anschluss 16 entlüftbar. In der Sperrstellung kann zumindest ein Teil des Kolbenfortsatzes 14 in die Mündung 5 des Zuströmkanals 3 eintauchen.

Gemäß Fig. 2 sind im Kolbenfortsatz 14 und in der Wand 8 zu den Kanälen 2, 3 weisende Leitflächen L1, L2 geformt. Die Leitflächen L1, L2 verlaufen allgemein gegenüber der Verstellrichtung des Ventilkolbens 11 schräg, und sind, vorzugsweise, für die sich in der Offenstellung entwickelnde Strömung (durch Pfeile angedeutet) zumindest bereichsweise konkav gerundet. In der Wand 8 ist ein schräg gekrümmt ansteigender, in Querrichtung konkav gerundeter Flächenabschnitt 20 in einen annähernd senkrecht zur Verstellrichtung des Ventilkolbens 11 verlaufenden, in Querrichtung ebenfalls konkav gerundeten Flächenabschnitt 22 übergeführt. Im Kolbenfortsatz 14 ist ausgehend von einer erhabenen Strömungsteilzone 23 ein schräger und gekrümmter, in Querrichtung konkav gerundeter Flächenabschnitt 21 vorgesehen. Die Flächenabschnitte 22, 21 sind z.B. etwa halbrund. Dadurch werden sowohl im Kolbenfortsatz 14 als auch in der Wand muldenartige Vertiefungen 19, 19' gebildet, die in der in Fig. 2 gezeigten Offenstellung harmonisch ineinander übergeführt sind.

Die Vertiefungen 19, 19' liegen sozusagen zwischen beiderseitigen Verdrängungskörpern K der Wand 8 und des Kolbenfortsatzes 14, die das Totvolumen in der Ventilkammer 7 auf ein Maß reduzieren, das eine optimale Strömungsführung in der Ventilkammer 7 erzeugt. Die Verdrängungskörper K der Wand 8 können an der Platte 1 anstehen. Die Verdrängungskörper K am Kolbenfortsatz 14 enden in der Offenstellung bei, an oder etwas in der Mündung 5. Die in Verstellrichtung des Ventilkolbens 11 gesehenen Tiefen der Vertiefungen 19, 19' sind annähernd gleich. Die Weite der Vertiefungen entspricht zumindest der lichten Weite der kleineren Mündungen 4. Bei einer alternativen Ausführungsform könnten die Vertiefungen 19, 19' sich in Strömungsrichtung zu den Mündungen 4 etwas verengen, um einen Düsenquerschnitt ähnlich einer Venturidüse zu bilden. In der Offenstellung in Fig. 2 kann sich der restliche Oberflächenbereich des Kolbenfortsatzes 14 außerhalb der Vertiefungen 19' in etwa auf der Höhe des hier ebenen und kreisringförmigen Ventilsitzes 6 befinden.

Die Leitflächen L1, L2 bewirken eine Zwangsumlenkung der Strömung, in den Fig. 1 und 2 aus dem Kanal 3 seitlich nach außen und dann nach oben in die Kanäle 2. Das Schaltventil in den Fig. 1 und 2 könnte alternativ mit umgekehrten Strömungsrichtungen arbeiten. Bei einer alternativen, nicht gezeigten Ausführungsform des Blasventils V könnten die Leitflächen L1 oder L2 auch nur am Kolbenfortsatz 14 oder nur in der Wand 8 angeordnet sein. Ferner könnte die Wand 8 Bestandteil des Gehäuses des Blasventils V sein.

In Fig. 1 ist gestrichelt bei 30 angedeutet, dass der Ring 9 in einen unteren Ring 29' und einen oberen Ring 27 unterteilt sein könnte. Der obere Ring 27 (siehe Fig. 7) weist außerhalb eines Durchgangs 28 für den Kolbenfortsatz 14 die zumindest eine Leitfläche L2 bzw. die Vertiefungen 19' mit den Flächenbereichen 20, 22 auf, und könnte ein Nachrüstteil sein.

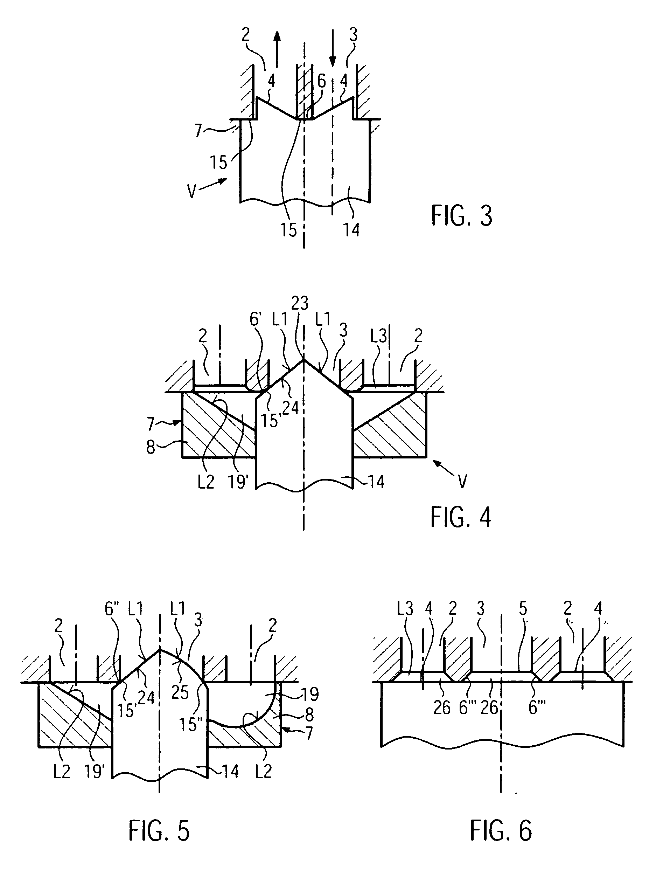

Bei der Ausführungsform des Blasventils V in Fig. 3 sind nebeneinanderliegend ein Zuströmkanal 3 und ein Abströmkanal 2 vorgesehen. Der Ventilsitz 6 ist eben, wie auch die Schließflächen 15 am Kolbenfortsatz 14. Am Kolbenfortsatz 14 sind zwei annähernd symmetrische, schräge Leitflächen L1 vorgesehen, die in der nicht gezeigten Offenstellung dies Strömung vom Kanal 3 seitlich zwangsumlenkend in den Kanal 2 führen. Die Leitflächen L1 sind als schräge Rampen angedeutet, könnten aber analog zu Fig. 2 auch in muldenartigen Vertiefungen geformt und gerundet sein.

In der Ausführungsform des Blasventils V in Fig. 4 ist der Kolbenfortsatz 14 mit einer konischen Spitze ausgebildet, die die Leitflächen L1, getrennt durch die Strömungsteilzone 23 bildet. Alternativ könnten die Leitflächen L1 gerade Dachflächen 24, getrennt durch einen die Strömungsteilzone 23 bildenden Kamm, sein. Die Schließfläche 15' des Kolbenfortsatzes 14 ist hier beispielsweise konisch, während der Ventilsitz 6' gerundet ist, so dass sich hier die Dichtwirkung in der Sperrstellung mit der Paarung Konusfläche/gerundeter Kreisring ergibt. In der Wand 8, die der Kolbenfortsatz 14 durchsetzt, sind entweder konische oder rampenartige Leitflächen L2 jeweils zu den Kanälen 2 gebildet. Die Leitflächen L1, L2 könnten auch in Vertiefungen 19, 19', die dann zweckmäßig konkav gerundet ausgebildet sind, analog zu Fig. 2 angeordnet sein. In Fig. 4 könnten bei konischen Leitflächen L1, L2 mehr als nur zwei außenliegende Kanäle 2 um den zentralen Kanal 3 verteilt sein.

In der Ausführungsform in Fig. 5 ist in der linken Hälfte eine Zusammenwirkung zwischen einer konischen Schließfläche 15' am Kolbenfortsatz 14 und einem als kreisförmig verlaufende, rechtwinklige Kante ausgebildeten Ventilsitz 6" angedeutet. Die Leitflächen L1 am Kolbenfortsatz 14 und L2 in der Wand 8 könnten analog zu Fig. 4, z.B. konisch ausgebildet sein.

In der rechten Hälfte von Fig. 5 ist hingegen eine Zusammenarbeit zwischen einer kugeligen Schließfläche 15" am Kolbenfortsatz 14 und der hier rechtwinkligen Kante des Ventilsitzes 6" angedeutet. Die Leitfläche L1 am Kolbenfortsatz 14 ist entweder eine umlaufende Kugelfläche oder eine konvex gekrümmte Fläche. In der Wand 8 ist in der rechten Hälfte als Leitfläche L2 eine von innen nach außen zunächst abfallende und dann allmählich bis in den Kanal 2 ansteigende, konkav gerundete Fläche gezeigt, die in einer ähnlichen Vertiefung wie der Vertiefung 19 in Fig. 2 geformt sein könnte.

In Fig. 6 ist schließlich eine Ausführungsform angedeutet, bei der in zumindest einer der Mündungen 4, 5 der Kanäle 2, 3 eine Gegenleitfläche L3 zur weiteren Verbesserung der Strömungsführung vorgesehen ist. Der Ventilsitz 6'" ist hier eine beispielsweise ringförmige Konusfläche 26, und kann mit einer konischen oder ballig gerundeten Schließfläche am in Fig. 6 nicht gezeigten Kolbenfortsatz zusammenarbeiten, beispielsweise um in der Sperrstellung leckagefrei abzusperren. Die Gegenleitflächen L3 sind beispielsweise konische Ansenkungen in den Mündungen 4, 5.

## Patentansprüche

1. Blasventil (V) einer Behälter-Blasmaschine, mit einem in einer Ventilkammer (7) zwischen wenigstens einer Zuströmkanal-Mündung (4, 5) und wenigstens einer Abströmkanal-Mündung (5, 4) angeordneten Ventilsitz (6, 6', 6", 6"'), dem in der Ventilkammer (7) ein durch eine Vorsteuerkraft linear zwischen einer mit einer Schließfläche (15, 15') am Ventilsitz (6, 6', 6", 6"') anliegenden Sperrstellung und einer abgehobenen Offenstellung verstellbarer Ventilkolben (11) zugeordnet ist, der mit einem die Schließfläche tragenden Kolbenfortsatz (14) eine Bohrung einer die Ventilkammer (7) begrenzenden Wand (8) abgedichtet verschiebbar durchsetzt, wobei ein durch die Ventilkammer (7) verlaufender Strömungsweg zwischen den Mündungen (2, 3) in der Sperrstellung absperrbar und in der Offenstellung freigebbar ist, **dadurch gekennzeichnet, dass** zur seitlichen Zwangsumlenkung der sich bei Abheben des Kolbenfortsatzes (14) im Strömungsweg entwickelnden Strömung die Wand (8) und der Kolbenfortsatz (14) in jeweils einer muldenartigen Vertiefung (19, 19') wenigstens eine gegenüber der Verstellrichtung des Ventilkolbens (11) allgemein schräge Leitfläche (L1, L2) aufweisen, die der Strömung zugewandt in Strömungsrichtung und quer dazu jeweils zumindest bereichsweise konkav gerundet ist.

2. Blasventil nach Anspruch 1, **dadurch gekennzeichnet, dass** der senkrecht zur Verstellrichtung des Ventilkolbens (11) orientierte Ventilsitz (6, 6', 6", 6"') und/oder die Schließfläche (15, 15') eben, kugelig oder konisch ausgebildet ist.

3. Blasventil nach Anspruch 1, **dadurch gekennzeichnet, dass** in der Offenstellung die Leitflächen (L1, L2) an der Wand (8) und am Kolbenfortsatz (14) harmonisch ineinander übergeführt sind.

4. Blasventil nach Anspruch 1, **dadurch gekennzeichnet, dass** sich die Leitfläche (L2) der Wand (8) bis zur Mündung (2) erstreckt.

5. Blasventil nach Anspruch 1, **dadurch gekennzeichnet, dass** die Wand (8) von einem in die Ventilkammer (7) eingesetzten Ring (9) gebildet ist.

6. Blasventil nach wenigstens einem der vorhergehenden Ansprüche, **dadurch gekennzeichnet, dass** in der Ventilkammer (7) in einer ebenen Begrenzungswand neben einer zentralen, vorzugsweise kreisrunden, Mündung (5) wenigstens eine, vorzugsweise ebenfalls kreisförmige, außenliegende Mündung (4), vorzugsweise zwei diametral angeordnete außenliegende Mündungen (4), vorgesehen ist bzw. sind, der bzw. denen jeweils eine nach außen ansteigende Leitfläche (L2) der Wand (8) zugeordnet ist, und dass der zur zentralen Mündung (3) ausgerichtete, zumindest in der Sperrstellung in die zentrale Mündung (3) bereichsweise eintauchende Kolbenfortsatz (14) zwei über eine erhabene Strömungsteilzone (23) verbundene und zu der jeweils außenliegenden Mündung (2) orientierte, abfallende Leitflächen (L1) aufweist.

7. Blasventil nach Anspruch 1, **dadurch gekennzeichnet, dass** die Vertiefungen (19, 19') in Verstellrichtung des Ventilkolbens (11) zumindest in etwa gleich tief sind.

8. Blasventil nach Anspruch 5, **dadurch gekennzeichnet, dass** der Ring (9) unterteilt ist in einen oberen, die Wand (8) in der Ventilkammer (7) definierenden Ring (27) mit der zumindest einen Leitfläche (L2) und einen unteren Ring (29), wobei, vorzugsweise, der untere Ring (29) außen die Ventilkammer (7) gegenüber einer Zwischenkammer (10) und/oder einer Vorsteuerkammer (13) und innen am Kolbenfortsatz (14) abdichtet.

9. Blasventil nach wenigstens einem der vorhergehenden Ansprüche, **dadurch gekennzeichnet, dass** die jeweilige Leitfläche (L1, L2) zwischen in der Wand (8) und/oder am Ventilkolben (11) vorgesehenen Verdrängungskörpern angeordnet sind, die sich in der Offenstellung des Blasventils bis oder nahe an eine die Mündungen (4, 5) enthaltende Begrenzungswand der Ventilkammer (7) erstrecken und das Totvolumen der Ventilkammer (7) minimieren.

10. Blasventil nach Anspruch 1, **dadurch gekennzeichnet, dass** sich die Vertiefungen (19, 19') in Strömungsrichtung allmählich verengen, und, vorzugsweise, einen Düsenquerschnitt ähnlich einer Venturidüse bilden.

11. Blasventil nach wenigstens einem der vorhergehenden Ansprüche, **dadurch gekennzeichnet, dass** entweder die zentrale Mündung (5) oder eine, vorzugsweise jede, außenliegende Mündung (4) zum Zuströmkanal (3, 2) gehört.

12. Blasventil nach wenigstens einem der vorhergehenden Ansprüche, **dadurch gekennzeichnet, dass** auch in zumindest einer der Mündungen (4,5) eine Gegenleitfläche (L3) geformt ist.

## Claims

1. Blow valve (V) of a blow-molding machine for containers, comprising a valve seat (6, 6', 6", 6"') which is arranged in a valve chamber (7) between at least one inflow channel mouth (4, 5) and at least one outflow channel mouth (5, 4) and has assigned thereto in the valve chamber (7) a valve piston (11) which is shiftable linearly by a pilot control force between a shut-off position abutting with a closing surface (15, 15') on the valve seat (6, 6', 6", 6"') and a lifted open position, which valve piston (11) has a piston extension (14) which carries the closing surface and passes sealingly shiftably through a bore of a wall (8) bounding the valve chamber (7), wherein a flow path which extends through the valve chamber (7) between the mouths (2, 3) can be shut off in the shut-off position and can be cleared in the open position, **characterized in that** for a lateral forced deflection of the flow developing in the flow path upon lifting of the piston extension (14), the wall (8) and the piston extension (14) comprise in a respective through-like recess (19, 19') at least one guide surface (L1, L2) which is generally inclined relative to the shifting direction of the valve piston (11), which guide surface (L1, L2) at least in portions facing the flow is concavely rounded in flow direction, and in a direction transverse thereto.

2. Blow valve according to claim 1, **characterized in that** the valve seat (6, 6', 6", 6"') which is oriented perpendicular to the shifting direction of the valve piston (11) and/or the closing surface (15, 15') is made flat, spherical or conical.

3. Blow valve according to claim 1, **characterized in that** in the open position of the valve piston (11) the guide surfaces (L1, L2) on the wall (8) and on the piston extension (14) are harmoniously passed into each other.

4. Blow valve according to claim 1, **characterized in that** the guide surface (L2) of the wall (8) extends up to the mouth (2).

5. Blow valve according to claim 1, **characterized in that** the wall (8) is formed by a ring (9) inserted into the valve chamber (7).

6. Blow valve according to at least one of the preceding claims, **characterized in that** in a flat boundary wall in the valve chamber (7) beside a central, preferably circular, mouth (5) at least one, preferably also circular, exterior mouth (4), preferably two diametrically arranged exterior mouths (4) is/are provided, which has/have assigned thereto an outwardly ascending guide surface (L2) of the wall (8), and that the piston extension (14) which is aligned relative to the central mouth (3) and which penetrates in portions at least in the shut-off position into the central mouth (3) comprises two descending guide surfaces (L1) that are connected via an elevated flow division zone (23) and oriented towards the respectively exterior mouth (2).

7. Blow valve according to claim 1, **characterized in that** the recesses (19, 19') have at least about the same depth in the shifting direction of the valve piston (11).

8. Blow valve according to claim 5, **characterized in that** the ring (9) is subdivided into an upper ring (27) defining the wall (8) in the valve chamber (7) and comprising the at least one guide surface (L2) and into a lower ring (29), preferably the lower ring (29) sealing the valve chamber (7) on the outside relative to an intermediate chamber (10) and/or the control chamber (13) and on the inside on the piston extension (14).

9. Blow valve according to at least one of the preceding claims, **characterized in that** the respective guide surface (L1, L2) is arranged between displacement bodies provided in the wall (8) and/or on the valve piston (11), which displacement bodies in the open position of the blow valve extend up to or near a boundary wall of the valve chamber (7), which contains the mouths (4, 5), and minimize the dead volume of the valve chamber (7).

10. Blow valve according to claim 1, **characterized in that** the recesses (19, 19') are gradually narrowing down in flow direction and preferably form a nozzle cross-section similar to a venturi nozzle.

11. Blow valve according to at least one of the preceding claims, **characterized in that** either the central mouth (5) or one, preferably each, exterior mouth (4) pertains to the inflow channel (3, 2).

12. Blow valve according to at least one of the preceding claims, **characterized in that** a counter-guide surface (L3) is formed in at least one of the mouths (4, 5).

## Revendications

1. Soupape de soufflage (V) d'une machine de soufflage de récipients, avec un siège de soupape (6, 6', 6", 6"') qui est disposé dans une chambre de soupape (7) entre au moins une ouverture de conduit d'amenée (4, 5) et au moins une ouverture de conduit d'écoulement (5, 4) et auquel est associé dans la chambre (7) un piston de soupape (11) qui est mobile linéairement grâce à une force pilote entre une position de blocage appliquée avec une surface de fermeture (15, 15') contre le siège de soupape (6, 6', 6", 6"') et une position d'ouverture soulevée, et qui traverse de manière mobile et étanche, avec un prolongement de piston (14) portant la surface de fermeture, un perçage d'une paroi (8) délimitant la chambre de soupape (7), étant précisé qu'une voie d'écoulement qui traverse la chambre de soupape (7) et qui s'étend entre les ouvertures (2, 3) est apte à être bloquée, dans la position de blocage, et dégagée, dans la position d'ouverture, **caractérisée en ce que** pour la déviation forcée latérale de l'écoulement qui se forme dans la voie d'écoulement lors du soulèvement du prolongement de piston (14), la paroi (8) et ledit prolongement de piston (14) présentent chacun dans un creux en forme de cuvette (19, 19') au moins une surface de guidage (L1, L2) qui est inclinée, dans l'ensemble, par rapport au sens de déplacement du piston de soupape (11) et qui a au moins par zones une forme arrondie concave du côté tourné vers l'écoulement, dans le sens de l'écoulement, et transversalement par rapport à celui-ci.

2. Soupape de soufflage selon la revendication 1, **caractérisée en ce que** le siège de soupape (6, 6', 6", 6"') orienté perpendiculairement au sens de déplacement du piston de soupape (11) et/ou la surface de fermeture (15, 15') sont plans, sphériques ou coniques.

3. Soupape de soufflage selon la revendication 1, **caractérisée en ce que** dans la position d'ouverture, les surfaces de guidage (L1, L2) prévues sur la paroi (8) et sur le prolongement de piston (14) se prolongent mutuellement harmonieusement.

4. Soupape de soufflage selon la revendication 1, **caractérisée en ce que** la surface de guidage (L2) de la paroi (8) s'étend jusqu'à l'ouverture (2).

5. Soupape de soufflage selon la revendication 1, **caractérisée en ce que** la paroi (8) est formée par une bague (9) qui est insérée dans la chambre de soupape (7).

6. Soupape de soufflage selon l'une des revendications précédentes, **caractérisée en ce qu'**il est prévu dans la chambre de soupape (7), dans une paroi de limitation plane et près d'une ouverture centrale (5), de préférence ronde, au moins une ouverture extérieure (4) de préférence circulaire elle aussi, de préférence deux ouvertures extérieures (4) diamétralement opposées, à laquelle ou auxquelles est associée une surface de guidage (L2) de la paroi (8) qui monte vers l'extérieur, et **en ce que** le prolongement de piston (14) qui est aligné sur l'ouverture centrale (3) et qui pénètre par zones dans celle-ci, au moins dans la position de blocage, présente deux surfaces de guidage (L1) qui sont reliées par une surface de division d'écoulement (23) saillante, qui descendent et qui sont orientées vers l'ouverture extérieure (2).

7. Soupape de soufflage selon la revendication 1, **caractérisée en ce que** les creux (19, 19') ont au moins à peu près la même profondeur, dans le sens de déplacement du piston de soupape (11).

8. Soupape de soufflage selon la revendication 5, **caractérisée en ce que** la bague (9) est divisée en une bague supérieure (27) qui définit la paroi (8) dans la chambre de soupape (7) et qui présente la ou les surfaces de guidage (L2), et une bague inférieure (29), étant précisé que, de préférence, la bague inférieure (29) rend étanche, à l'extérieur, la chambre de soupape (7) par rapport à une chambre intermédiaire (10) et/ou à une chambre pilote (13) et, à l'intérieur, contre le prolongement de piston (14).

9. Soupape de soufflage selon l'une au moins des revendications précédentes, **caractérisée en ce que** la surface de guidage (L1, L2) est disposée entre des corps de refoulement qui sont prévus dans la paroi (8) et/ou sur le piston de soupape (11) et qui s'étendent, dans la position d'ouverture de la soupape de soufflage, jusqu'à la paroi de limitation ou jusqu'à proximité de la paroi de limitation de la chambre de soupape (7) qui contient les ouvertures (4, 5), et qui minimalisent le volume mort de ladite chambre (7).

10. Soupape de soufflage selon la revendication 1, **caractérisée en ce que** les creux (19, 19') rétrécissent progressivement dans le sens de l'écoulement et forment de préférence une section transversale de buse semblable à un venturi.

11. Soupape de soufflage selon l'une au moins des revendications précédentes, **caractérisée en ce que** l'ouverture centrale (5) ou une, de préférence chaque, ouverture extérieure (4) fait partie du conduit d'amenée (3, 2).

12. Soupape de soufflage selon l'une au moins des revendications précédentes, **caractérisée en ce qu'**une surface de guidage opposée (L3) est également formée dans l'une au moins des ouvertures (4, 5).
